# EUROPÄISCHE PATENTANMELDUNG

(11) **EP 4 711 726 A2**
(43) Veröffentlichungstag der Anmeldung: **18.03.2026**
(21) Anmeldenummer: 25201713.2
(22) Anmeldetag: 11.09.2025
(51) Int. Cl.: G01H 3/12, G01H 5/00, H04S 7/00

(54) **VERFAHREN UND SYSTEM ZUR UMGEBUNGSUNABHÄNGIGEN AKUSTISCHEN VERMESSUNG EINER SCHALL EMITTIERENDEN QUELLE**

(30) Priorität: 12.09.2024 LU 508266
(71) Anmelder: WILO SE, 44263 Dortmund (DE)
(72) Erfinder: Vestrick, Guenter, 44263 Dortmund (DE); Teschers, Christoph, 44263 Dortmund (DE)
(74) Vertreter: Cohausz Hannig Borkowski Wißgott

(57) **Zusammenfassung**

Die Erfindung betrifft ein Verfahren und System zur Vermessung einer Schall emittierenden Quelle (12) durch Messung des Schalls an einer Vielzahl diskreter Messpositionen, die auf einer die Quelle (12) vollständig umschließenden Messfläche liegen. Dabei wird eine erweiterte Realität verwendet wird, indem eine Kamera (3c) eine relativ zur Quelle (12) im Raum angeordnete, physische Referenzmarke (8) scannt, die den Ursprung und die Ausrichtung eines virtuellen dreidimensionalen Koordinatensystems im realen dreidimensionalen Raum definiert, eine Verarbeitungssoftware in dem Koordinatensystem ein die Messfläche bildendes Flächengitter (2) erzeugt und die im realen dreidimensionalen Raum einzunehmenden Messpositionen derart bezogen auf die Referenzmarke (8) festlegt, dass sie auf dem Flächengitter (2) liegen, wobei die Verarbeitungssoftware ferner virtuelle, je eine der Messpositionen im realen dreidimensionalen Raum visualisierende Markierungen (6) erzeugt und auf einem durchsichtigen Display (3b) einer brillenartigen Wiedergabeeinrichtung (3) derart anzeigt, dass die geometrischen Orte der Markierungen (6) im realen Raum bezogen auf die Referenzmarke (8) fix und unabhängig von der Orientierung des Displays (3b) sind. Anschließend wird dann eine durch das Display hindurch sichtbare Schallmesssonde (4a) während der Anzeige der Markierungen (6) nacheinander manuell an die Orte der virtuellen Markierungen (6) geführt und dort jeweils eine Messung der Schallintensität durchgeführt.

## Beschreibung

Die Erfindung betrifft ein Verfahren zur umgebungsunabhängigen akustischen Vermessung einer Schall emittierenden Quelle, insbesondere von Pumpenaggregaten, durch Messung des Schalls an einer Vielzahl diskreter Messpositionen, die auf einer die Quelle vollständig umschließenden Messfläche liegen. Die Erfindung betrifft zudem ein zugehöriges System zur Durchführung des Verfahrens.

Nach der sogenannten Maschinenrichtlinie 2006/42/EG und der europäischen Verordnung Nr. 2023/1230 vom 14. Juni 2023 müssen Maschinen in Europa bestimmten formalen sowie grundlegenden Sicherheits- und Gesundheitsanforderungen entsprechen. Unter anderem besteht die Forderung, dass Maschinen bzw. dazugehörige Produkte so konstruiert und gebaut sein müssen, dass Risiken durch Luftschallemission insbesondere an der Quelle so weit gemindert werden, wie es nach dem Stand des technischen Fortschritts und mit den zur Lärmminderung verfügbaren Mitteln möglich ist. Um dieses Ziel zu erreichen, sind akustische Vermessungen der Maschinen notwendig. Die Messwerte werden in den Katalogdaten zur jeweiligen Maschine angegeben. Dies erfordert einheitliche Regeln für die Messung der Schallemissionspegel und möglichst objektive Messverfahren.

Die Normen DIN EN ISO 9614-1 (2009-11), DIN EN ISO 9614-2 (1996-12), DIN EN ISO 9614-3 (2009-11) beschreiben Verfahren zur Bestimmung der Schallleistungspegel von Geräuschquellen aus Schallintensitätsmessungen und deren Einordnung in drei verschiedene Genauigkeitsklassen (1 bis 3), indem die zu einer Messfläche senkrechte Komponente (Normalkomponente) der Schallintensität an diskreten Positionen oder durch Abfahren auf einer Messfläche gemessen wird, die so zu wählen ist, dass sie die Geräuschquelle vollständig umschließt. Die Flächenintegration der zur Messfläche senkrechten Intensitätskomponente wird durch eine Unterteilung der Messfläche in aneinander angrenzende Teilflächen und ein Abtasten (Scannen), oder Abfahren jeder Teilfläche durch eine Intensitätsmesssonde eines Messgeräts angenähert. Das Messgerät bestimmt die über den gesamten Abtast-Vorgang gemittelte Normalkomponente der Schallintensität und das gemittelte Schalldruckquadrat. Vorteilhaft ist bei dem Verfahren, dass das akustische Abtasten oder Scannen auch von Personen ohne Akustikerfahrung durchgeführt werden kann. Nachteilig ist allerdings, dass die Messsonde immer wieder neu an den einzelnen Messpunkten positioniert wird und, sollte das Positionieren und darauffolgende Abtasten der einzelnen Teilflächen nicht hinreichend genau mittig der Teilflächen durchgeführt werden. Dieses Problem tritt ebenfalls bei jenem Scanning Verfahren auf, bei dem die Messsonde entlang einem vorgeschriebenen Messpfad geführt werden muss.

Außerdem ist in der Praxis die manuell durchzuführende rechnerische Festlegung der Messfläche um den Prüfling herum sowie die Berechnung der Lage der einzelnen Messpositionen im dreidimensionalen Raum relativ zueinander zeitaufwändig und mühsam. Ferner ist die genaue Einhaltung der Messpositionen schwierig. Weicht der geometrische Ort der Messsonde bei den Messungen von den definierten Messpositionen ab, erhöht sich die Unsicherheit der Messung und die Qualität der Vermessung leidet.

Eine bekannte Hilfskonstruktion zur räumlich korrekten Festlegung der Messpositionen ist es, ein physisches Flächengitter aus Stangen und Verbindern um die Quelle herum aufzubauen. Das Flächengitter schließt somit ein Volumen ein, in dessen Zentrum die Quelle liegt. Die Stangen werden dabei mit Hilfe der Verbinder aneinandergereiht bzw. gesteckt. Selbst wenn dies einfach und werkzeuglos mittels Steckverbindungen erfolgt, dauert der Aufbau des Flächengitters relativ lange, teilweise 3 bis 4 Stunden.

Es ist deshalb Aufgabe der vorliegenden Erfindung, ein Verfahren und System bereitzustellen, dass die akustische Vermessung eines Schall emittierenden Prüflings vereinfacht, den zeitlichen Aufwand für die Vermessung verringert und die Messqualität verbessert.

Diese Aufgaben werden durch ein Verfahren mit den Merkmalen des Anspruchs 1 und ein System mit den Merkmalen des Anspruchs 14 gelöst. Vorteilhafte Weiterbildungen sind in den Unteransprüchen angegeben und werden nachfolgend erläutert.

Erfindungsgemäß wird ein Verfahren zur umgebungsunabhängigen akustischen Vermessung einer Schall emittierenden Quelle durch Messung des Schalls an einer Vielzahl diskreter Messpositionen, die auf einer die Quelle vollständig umschließenden Messfläche liegen, vorgeschlagen, bei dem zur Vermessung eine erweiterte Realität verwendet wird, indem
- eine Kamera eine relativ zur Quelle im Raum angeordnete, physische Referenzmarke scannt, die den Ursprung und die Richtung der Koordinatenachsen eines virtuellen dreidimensionalen Koordinatensystems im realen dreidimensionalen Raum definiert,
- eine Verarbeitungssoftware in dem Koordinatensystem ein strukturiertes, dreidimensionales Flächengitter aus Gitterzellen und Gitterpunkten und mit einer vorbestimmten oder vorgegebenen Größe derart erzeugt, dass es die Quelle vollständig umgibt, und die im realen dreidimensionalen Raum einzunehmenden Messpositionen derart bezogen auf die Referenzmarke festlegt, dass sie auf dem Flächengitter liegen,
- die Verarbeitungssoftware virtuelle, je eine der Messpositionen im realen dreidimensionalen Raum visualisierende Markierungen erzeugt und auf einem durchsichtigen Display einer brillenartigen Wiedergabeeinrichtung derart anzeigt, dass die geometrischen Orte der Markierungen im realen dreidimensionalen Raum bezogen auf die Referenzmarke fix und unabhängig von der Orientierung des Displays sind, und
- die Vermessung derart erfolgt, dass eine durch das Display hindurch sichtbare Schallmesssonde während der Anzeige der Markierungen nacheinander manuell an die Orte der virtuellen Markierungen geführt wird und anschließend dort jeweils eine Messung der Schallintensität durchgeführt wird.

Ferner wird ein System zur Durchführung des Verfahrens vorgeschlagen, umfassend die Schallmesssonde, die physische, relativ zur Quelle im Raum anzuordnende Referenzmarke, die den Ursprung und die Richtung der Koordinatenachsen des virtuellen, dreidimensionalen Koordinatensystems im realen dreidimensionalen Raum definiert, die Kamera zur Erfassung der Referenzmarke, die brillenartige Wiedergabeeinrichtung mit dem durchsichtigen Display und eine Steuereinheit mit einem Prozessor, einem Speicher und der darin gespeicherten, auf dem Prozessor ausführbaren Verarbeitungssoftware, die eingerichtet ist,
- in dem Koordinatensystem ein strukturiertes, dreidimensionales Flächengitter aus Gitterzellen und Gitterpunkten und mit einer vorbestimmten oder vorgegebenen Größe derart zu erzeugen, dass es die Quelle vollständig umgibt,
- die im realen dreidimensionalen Raum einzunehmenden Messpositionen derart bezogen auf die Referenzmarke festzulegen, dass sie auf dem Flächengitter liegen, und
- virtuelle, je eine der Messpositionen im realen dreidimensionalen Raum visualisierende Markierungen auf dem Display derart anzuzeigen, dass die geometrischen Orte der Markierungen im realen Raum bezogen auf die Referenzmarke fix und unabhängig von der Orientierung des Displays sind.

Das erfindungsgemäße Verfahren und das System sind insoweit von der Umgebung unabhängig, als dass die Schall emittierende Quelle nicht innerhalb eines reflexionsarmen Raums mit Schall absorbierenden Wandverkleidungen vermessen werden muss. Vielmehr kann die Schallquelle in nahezu jeder Umgebung vermessen werden, beispielsweise in einer Werkshalle.

Die gemessene Größe des Schalls ist der Schalldruck, aus dem dann die Schallintensität bestimmt wird. Die Schallmesssonde ist in diesem Fall eine Schallintensitätssonde, die mithilfe von zwei Mikrofonen, die unabhängig voneinander den Schalldruck messen, die Richtung des Schalls lokalisiert und somit zwischen dem Schall der zu messenden Quelle und den Umgebungsgeräuschen unterscheiden kann. Die Mikrofone nehmen also jeweils die Frequenz und den Pegel des Schalls auf. Sie sind hintereinander angeordnet und diametral ausgerichtet. Das eine Mikrofon zeigt während der Messung in Richtung der Schallquelle und das andere Mikrofon zeigt in Richtung Umgebung, so dass die Mikrofone zeitlich versetzt die einzelnen Schalldruckwellen wahrnehmen. Durch die Kenntnis der Frequenz und die Konstanz der Schallgeschwindigkeit in Luft (abhängig von Druck, Temperatur und Luftfeuchte), kann dann aus dem zeitlichen Versatz des einfallenden Schalls an den beiden Mikrofonen der Winkel des einfallenden Schalls zur Intensitätssonde bestimmt werden. Damit kann zwar die Richtung des Schalls nicht dreidimensional bestimmt werden, aber die Intensität des Schalls in Richtung der Normalkomponente senkrecht zu den beiden Mikrofonen.

Durch die Darstellung der Markierungen auf dem durchsichtigen, d.h. transparenten Display, wirken die Markierungen für den Anwender bzw. Träger der Wiedergabeeinrichtung wie Hologramme, die in die Realität hineinprojiziert sind (Mixed Reality), wenn er durch das Display hindurchschaut.

Wie im Stand der Technik schließt auch hier das Flächengitter ein Volumen ein, in dessen Zentrum die Quelle liegt oder zumindest liegen sollte, soweit dies möglich ist. Das Flächengitter ist hier jedoch kein physisches Gitter, sondern ein rein virtuelles Gitter, das in dem von der Referenzmarke definierten Koordinatensystem erzeugt wird und als Hilfsmittel dient, um die Messposition festzulegen und zu visualisieren. Insoweit muss kein physisches Flächengitter aufwändig und zeitraubend zusammengebaut werden. Da kein physisches Flächengitter benötigt wird, werden außerdem Kosten und Gewicht bei den Systemkomponenten eingespart. Das Platzieren der Referenzmarke relativ zur Schallquelle, das Scannen der Referenzmarke und die Bestimmung der Messpositionen dauern nur wenige Minuten, so dass das erfindungsgemäße Verfahren effizient und zuverlässig ist.

Die Referenzmarke wird relativ zur Quelle positioniert. Sie definiert den Ursprung somit die Lage des Koordinatensystems und die Richtung der Koordinatenachsen, d.h. die Ausrichtung des Koordinatensystems. Als besonders geeignet für ein kartesisches Koordinatensystem hat sich eine gezeichnete zweidimensionale Figur in Form eines Rechtecks, insbesondere eines Quadrats herausgestellt. Diese Figur hat den Vorteil, dass eine Ecke des Rechtecks den Ursprung markieren kann und die beiden von der Ecke ausgehenden Kanten der Form zwei der drei Koordinatenachsen definieren, nämlich x- und y-Richtung, wobei die dritte Koordinatenachse, z-Richtung, rechtwinklig zu den beiden Kanten liegt, d.h. sich orthogonal aus der Ecke des Rechtecks erhebt.

Vorzugsweise kann die Referenzmarke ein Matrixcode wie beispielsweise ein QR-Code sein. Ein QR-Code hat den Vorteil, dass aufgrund der in ihm enthaltenen Informationen seine Orientierung im Raum unmittelbar erkennbar ist. Dies ermöglicht es, bei dem Flächengitter in Bezug auf die Referenzmarke die Ortsangaben vorne, hinten, rechts und links zu definieren. Dies wiederum hilft, Flächenabschnitte des Flächengitters zu unterscheiden und eindeutig zu identifizieren.

Man ist besonders flexibel, wenn die Referenzmarke auf einem mobilen Träger aufgebracht, insbesondere darauf gedruckt ist. Dies ermöglicht es, die Referenzmarke an einem beliebigen Ort neben der zu vermessenden Schallquelle anzuordnen, beispielsweise auf dem Boden des Raumes, in dem die Quelle sich befindet. Im einfachsten Fall kann der Träger ein Blatt Papier oder eine Folie sein.

In einer Ausführungsvariante kann vorgesehen sein, dass die Markierungen einzeln nacheinander angezeigt werden. Dies hat den Vorteil, dass nur wenige Informationen auf dem Display angezeigt werden müssen und die messende Person den Überblick behält. Des Weiteren wird durch das Erscheinen der Markierungen nacheinander angezeigt, an welcher der Messpositionen als nächstes gemessen werden soll, so dass letztendlich ein Messpfad vorliegt, entlang welchem die Messpositionen liegen.

Im Ergebnis ist dann bei dem Verfahren vorgesehen, dass nach einer erfolgten Messung wiederholt
a. eine weitere virtuelle Markierung angezeigt wird, die eine weitere der Messpositionen im realen dreidimensionalen Raum visualisiert, und
b. die Schallmesssonde an den Ort der weiteren virtuellen Markierung geführt und anschließend dort eine weitere Messung des Schalls durchgeführt wird.

Diese beiden Schritte werden so oft wiederholt, bis an allen Messpositionen eine Messung durchgeführt worden ist.

Selbstverständlich können in einer alternativen Ausführungsvariante alle oder nur ein Teil der virtuellen Markierungen gleichzeitig auf dem Display angezeigt werden. Im Falle eines Teils der virtuellen Markierungen können beispielsweise nur diejenigen virtuellen Markierungen gleichzeitig angezeigt werden, die aus der Perspektive der Kamera keine durch die Quelle verdeckte Messposition im realen dreidimensionalen Raum visualisieren. Alternativ können nur diejenigen Markierungen angezeigt werden, die zu einem bestimmten, insbesondere dem aktuellen Flächenabschnitt des Flächengitters gehören. Der aktuelle Flächenabschnitt ist eine definierte Teilfläche des Flächengitters, beispielsweise eine ebene Seite, auf der jene Messpunkte liegen, in denen bereits Schallmessungen vorgenommen wurden oder vorzunehmen sind.

Um der messenden Person das korrekte Positionieren der Messsonde an der Messposition zu erleichtern, kann vorgesehen sein, dass eine der virtuellen Markierungen von einem ersten Anzeigezustand in einen zweiten Anzeigezustand übergeht, sobald die Schallmesssonde den geografischen Ort der Messposition, den diese Markierung visualisiert, im realen dreidimensionalen Raum erreicht hat. Beispielsweise kann die Farbe der Markierung gewechselt und/ oder der gemessene Luftschallwert angezeigt werden.

Alternativ oder zusätzlich kann die messende Person bei der Vermessung der Schallquelle dadurch unterstützt werden, dass sich eine der virtuellen Markierungen gegenüber anderen der virtuellen Markierungen unterscheidet, um so die Messposition der nächsten Messung anzuzeigen. Optisch anders dargestellt wird also jene Markierung, die die nächste Messposition visualisiert. Somit weiß die messende Person, wo sie die Messsonde als nächstes positionieren muss.

Es sei angemerkt, dass für die Durchführung des erfindungsgemäßen Messverfahrens in der erweiterten Realität das Flächengitter selbst nicht angezeigt werden muss, da die Markierungen für die Positionierung der Messsonde an den einzelnen Messpositionen ausreichen. Gleichwohl kann es für die messende Person von Vorteil sein, das virtuelle Flächengitter ebenfalls zu sehen, weil es hilft, sich zu orientieren und die Markierung innerhalb der gesamten Messfläche oder eines Flächenabschnitts der Messfläche korrekt einzuordnen. Deshalb kann in einer Ausführungsvariante auch das Flächengitter auf dem Display angezeigt werden.

Das Flächengitter besteht aus Gitterzellen und Gitterpunkten, wobei die Gitterzellen lückenlos und überlappungsfrei aneinandergefügt sind. Eine Gitterzelle kann somit mathematisch auch als eine Kachel betrachtet werden. Die Messpositionen können in einer Ausführungsvariante jeweils im Zentrum einer der Gitterzellen liegen. Alternativ kann vorgesehen sein, dass die Messpositionen auf einem der Gitterpunkte liegen. Im erstgenannten Fall wird jeder Gitterzelle, im zweitgenannten Fall jedem Gitterpunkt der Schallmesswert derjenigen Messung zugeordnet, die in der entsprechenden Gitterzelle oder an dem entsprechenden Gitterpunkt vorgenommen worden ist. Liegen die Messpositionen, respektive die Markierungen jeweils im Zentrum der Gitterzellen, kann eine Gitterzelle im Rahmen des erfindungsgemäßen Messverfahrens als Teilmessfläche der gesamten Messfläche betrachtet werden, da jeder Gitterzelle der Messwert der in ihr aufgenommenen Messung zugeordnet ist.

Die Form der Gitterzellen kann grundsätzlich beliebig sein, soweit sie sich dazu eignet, eine lückenlose und überlappungsfreie Fläche zu bilden. Mathematisch am einfachsten sind jedoch Gitterzellen in der Form von regelmäßigen Polyedern wie gleichseitige Dreiecke, Quadrate und Sechsecke, oder in Form von Rechtecken. Die Gitterzellen müssen innerhalb des Flächengitters nicht alle dieselbe Form aufweisen. Beispielsweise kann ein Flächenabschnitts der Messfläche durch Quadrate, ein anderer Flächenabschnitt durch Rechtecke mit nur zwei gleich langen Kanten gebildet sein.

Wie bereits angesprochen, schließt das Flächengitter ein Volumen ein, wobei die Quelle möglichst im Zentrum dieses Volumens liegen sollte. Dieses Volumen kann in einer einfachen Ausführungsvariante die Form eines Quaders oder Kubus haben. Es ist aber ebenso möglich und mittels Software ebenso einfach zu realisieren, dass das Volumen die Form einer Hemisphäre (Halbkugel, Halbellipsoid) oder eines Zylinders (Kreiszylinder oder elliptischer Zylinder) hat. Es versteht sich von selbst, dass in den beiden letztgenannten Fällen die Gitterzellen gekrümmte Flächen sind, entweder im Falle eines Kreiszylinders einfach bzw. in nur eine Raumrichtung gekrümmt oder im Falle einer Hemisphäre zweifach bzw. in zwei Raumrichtungen gekrümmt.

Erfindungsgemäß wird ein strukturiertes Flächengitter verwendet. Das bedeutet, dass das Gitter eine regelmäßige Topologie, jedoch nicht notwendigerweise eine regelmäßige Zellgeometrie aufweist. Die Gitterzellen liegen in einem regelmäßigen Raster vor, so dass sich die Zellen eindeutig durch ganzzahlige Zahlen indizieren lassen. Hierdurch können Nachbarzellen ohne rechnerischen Aufwand ermittelt werden.

Damit die Bestimmung der Lage der Messpositionen eine minimale Rechenleistung benötigt, sollte das Flächengitter rechtwinklig und gleichmäßig sein. Ein rechtwinkliges Flächengitter zeichnet sich dadurch aus, dass der Raum vollständig in achsenparallele Bereiche unterteilt wird. Diese müssen nicht, können aber gleich groß sein. Alle Gitterzellen sind in diesem Fall Rechtecke. Im dreidimensionalen Raum entstehen dadurch Volumenkörper in Form von Quadern oder Kuben. Ein gleichmäßiges Flächengitter zeichnet sich ferner dadurch aus, dass der Raum vollständig in achsenparallele rechtwinklige Bereiche unterteilt wird, wobei Kanten entlang einer Achse immer die gleiche Länge haben. Alle Gitterzellen einer Seite sind somit gleich, entweder mit vier gleichen Kantenlängen (Quadrate) oder mit jeweils zwei gleichen Kantenlängen (Rechtecke). Im dreidimensionalen Raum werden dadurch Quader oder Kuben beschrieben, die selbst aus identischen Quadern oder Kuben zusammengesetzt sind.

Im Fall eines Quaders, insbesondere eines Kubus, können dessen ebene Seiten jeweils als ein Flächenabschnitt der Messfläche betrachtet werden.

Wird berücksichtigt, dass die Schallquelle auf dem Boden angeordnet ist und die Messfläche respektive das Flächengitter bildlich betrachtet über die Schallquelle gestülpt wird, hat das gleichmäßige Flächengitter fünf rechtwinklig zueinander liegende Seiten mit jeweils n x n oder n x m Gitterzellen oder Gitterpunkten, wobei n und m ganze Zahlen sind, die je nach benötigter Größe des Flächengitters und Genauigkeit der Vermessung variieren können. In der Praxis haben sich für die meisten Anwendungsfälle Werte für n und m zwischen 3 und 6 als ausreichend gezeigt. Eine Seite des Flächengitters kann also in der Praxis beispielsweise 3x3, 3x4 oder 4x4 Gitterzellen bzw. Teilmessflächen, oder mit anderen Worten 9, 12, 16 oder auch mehr Messpositionen umfassen. Es sei allerdings angemerkt, dass die DIN EN ISO 9614-1 (2009-11) mindestens 50 Messpunkte insgesamt vorschreibt, so dass für eine normkonforme akustische Vermessung der Schallquelle, fünf 3x3 Seiten nicht ausreichen (45 Gitterzellen), wohl aber fünf 4x4 Seiten (80 Gitterzellen) oder zwei 3x3 Seiten und drei 3x4 Seiten (54 Gitterzellen).

Vorzugsweise ist das Flächengitter ein kartesisches Gitter. In diesem Fall sind die Kantenlängen der Gitterzellen entlang jeder Achse gleich lang. Mit anderen Worten wirkt der Volumenkörper als aus Kuben (Würfeln) quasi zusammengesetzt und jede Gitterzelle ist ein Quadrat.

Ist die Referenzmarke, wie zuvor ausgeführt, eine gezeichnete zweidimensionale Figur in Form eines Rechtecks, insbesondere eines Quadrats, ist die Positionierung und Ausrichtung des Flächengitters im realen Raum besonders einfach. So kann das dreidimensionale Flächengitter in einer Ausführungsvariante mit einer Ecke auf dem Ursprung des durch die Referenzmarke definierten Koordinatensystems liegen und sich mit einer Kante einer die Ecke umfassenden Gitterzelle entlang der Kante der gezeichneten Form erstrecken. Es ist aber auch möglich, dass der Ursprung kein Punkt auf dem Flächengitter ist, sondern bewusst ein Versatz in x, y, und/ oder z-Richtung zwischen dem Ursprung und der Ecke des Flächengitters besteht. Letztes ist vor allem dann sinnvoll, wenn die Quelle nicht auf einem Boden steht. Ein Beispiel hierfür wird nachfolgend noch erläutert.

Es ist von Vorteil, wenn auf dem Display auch Einblendungen mit textlichen und/ oder bildlichen Anweisungen angezeigt werden. Die Anweisungen richten sich an eine die Schallmesssonde führende Person und vereinfachen deren Handhabung respektive den Messvorgang als solchen, da die Person kein Handbuch mehr zur Hand nehmen muss, in dem die notwendigen Handlungen und wie diese vorgenommen werden, erklärt sind.

Beispielsweise können die textlichen und/oder bildlichen Anweisungen zum Gegenstand haben, welcher Schritt als nächstes ausgeführt werden muss, insbesondere wie die Schallmesssonde bedient werden muss.

Damit die Markierungen, oder gegebenenfalls das Flächengitter, von den Einblendungen nicht überdeckt werden, sollten diese derart auf dem Display angezeigt werden, dass sie in einem Eck- oder Seitenbereich des Displays angezeigt werden. Es kann aber auch vorgesehen sein, dass die Einblendungen vom Anwender frei auf dem Display, und damit im Raum, verschiebbar sind.

Beispielsweise kann eine Einblendung eine Miniaturansicht eines Flächenabschnitts des Flächengitters sein, auf dem aktuell Schallmessungen von der Verarbeitungssoftware erwartet bzw. durchgeführt werden. Die Miniaturansicht kann in Abhängigkeit des Messfortschritts angepasst werden, indem diejenigen Gitterzellen oder Gitterpunkte, bei denen bereits eine Schallmessung durchgeführt worden ist, in der Miniaturansicht grafisch anders dargestellt werden als Gitterzellen oder Gitterpunkte, in denen noch keine Schallmessung erfolgt ist.

In einer Ausführungsvariante kann die Schallmesssonde baulich mit einem Handgerät eine Einheit bilden. Die Schallmesssonde überträgt in diesem Fall ihre Messdaten an das Handgerät. Das Handgerät weist ein Display, eine Steuereinheit mit einem Prozessor und einem Speicher und eine darin gespeicherte, auf dem Prozessor ausführbare Messsoftware auf, in der eine rasterartige Verteilung von Messpositionen zur Vermessung der Quelle auswählbar ist. Diese Auswahl kann insbesondere durch eine grafische Benutzeroberfläche auf dem Display unterstützt werden, beispielsweise in dem das Verteilungsraster der Messpositionen auf dem Display angezeigt wird. Somit hat eine die Messung vornehmende Person die Möglichkeit, die rasterartige Verteilung der Messpositionen an die zu vermessende Schallquelle anzupassen, beispielsweise die Anzahl der Gitterzellen vorzugeben. Das Verteilungsraster ist im einfachsten Fall zweidimensional.

Die Messoftware dient der Auswertung der Messungen und Berechnung der Schallintensität. In einer anderen Variante kann die Schallmesssonde ein Zweikanalmessaufnehmer (zwei Mikrofone) sein, der lediglich Messwerte aufnimmt, die Auswertung und Berechnung jedoch auslagert, beispielsweise auf die Wiedergabeeinrichtung oder einen externen Rechner. Somit kann die Schallmesssonde auch ein kleineres Gerät sein, das über keine eigene Software und kein Display verfügt. Dies spart Gewicht und verringert den Energieverbrauch.

Um die oberen Messpositionen zu erreichen kann die Schallmesssonde an einem Ende eines Stabes befestigt sein. Ideal ist es, wenn der Stab teleskopierbar ist.

Für die Verwendung der Schallmesssonde mit dem Handgerät ist die Verarbeitungssoftware eingerichtet, das dreidimensionale Flächengitter auf die ausgewählte rasterartige Verteilung der Messpositionen abzustimmen, so dass die Messpositionen mit den Mittelpunkten der Gitterzellen oder den Gitterpunkten korrespondieren. In der Verarbeitungssoftware können hierfür mehrere auswählbare strukturierte dreidimensionale Flächengitter implementiert sein, die sich in der Form, Größe, in der Gesamtanzahl an Gitterzellen oder Gitterpunkten und/ oder in der Anzahl an Gitterzellen oder Gitterpunkte pro Flächenabschnitt (Seite) unterscheiden.

Die die Messung durchführende Person kann dann in der Verarbeitungssoftware dasjenige Flächengitter auswählen, das in der Messsoftware mit der rasterartigen Verteilung der Messpositionen korrespondiert. Alternativ kann eine Kommunikation zwischen dem Handgerät und der Steuereinheit vorgesehen sein, die das Handgerät nutzt, um die ausgewählte Verteilung an die Steuereinheit zu melden, die dann automatisch ein zur Verteilung korrespondierendes Flächengitter auswählt und einstellt.

Die Wiedergabeeinrichtung ist in der Art einer aufsetzbaren Brille ausgebildet und zwar derart, dass das Display vor den Augen der messenden Person liegt. Die messende Person hat somit die Hände frei, um die Schallmesssonde und das Handgerät zu halten. Im Hinblick darauf, dass die Markierungen und gegebenenfalls weiterer digitale Informationen (Messpfad, Einblendungen) auf dem durchsichtigen Display der Wiedergabeeinrichtung angezeigt werden, während die messende Person durch das Display hindurchblickt und die Umgebung betrachtet, d.h. die Realität auf der Wiedergabeeinrichtung erweitert wirkt, kann die Brille als AR-Brille (AR = Augmented Reality) bezeichnet werden. Ein Beispiel einer solchen AR-Brille ist die sogenannte "HoloLens 2" von der Firma Microsoft Corporation, One Microsoft Way, Redmond, WA 98052-6399, USA, die für die vorgestellte Anwendung besonders geeignet ist.

Idealerweise ist auch die Steuereinheit samt Verarbeitungssoftware Teil der Wiedergabeeinrichtung. Somit besteht das erfindungsgemäße System baulich nur aus drei Teilen, nämlich der Wiedergabeeinrichtung, der Referenzmarke und der Schallmesssonde. Das System ist dadurch für einen mobilen Einsatz geeignet, da es platzsparend und leichtgewichtig ist und einfach transportiert werden kann.

Gemäß einer besonderen Ausführungsvariante kann die Schallmesssonde Teil einer fernsteuerbaren Drohne sein. Diese Ausführungsvariante ist besonders zur Vermessung großer Schallquellen geeignet, bei denen die potentiellen Messpositionen nicht oder nur mit erheblichem Aufwand von der messenden Person erreicht werden können, insbesondere weil sie Meterhoch (5m, 10m oder 15m) in die Höhe ragen. Als Beispiel seien hier vertikale Turbinenpumpen genannt. Auch bei solchen Schallquellen kann das erfindungsgemäße Verfahren Anwendung finden. Die Drohne kann manuell an den Ort einer der virtuellen Markierungen geflogen werden und anschließend dort eine Messung des Schalls durchführen.

Für die Vermessung der vertikalen Seitenflächen kann die Drohne ein erstes, zu einer Seite, insbesondere nach vorne und hinten gerichtetes Mikrofonpaar aufweisen. Zusätzlich kann sie für die horizontal liegende Fläche des Flächengitters ein zweites Mikrofonpaar aufweisen, dass nach unten und oben gerichtet ist. Die Mikrofone können oberhalb oder unterhalb der Drohne angeordnet sein. In einer anderen Ausführungsvariante kann die Drohne nur ein Mikrofonpaar aufweisen, das derart eingerichtet und angeordnet ist, dass es von einer ersten Ausrichtung, beispielswiese nach vorne und hinten, in eine zweite Ausrichtung, beispielswiese nach unten und oben, gebracht werden kann, entweder durch einen manuellen Umbau oder durch ein automatisches Verstellen.

Weitere Merkmale, Eigenschaften und Vorteile des erfindungsgemäßen Verfahrens und des Systems werden nachfolgend anhand von Ausführungsbeispielen und der beigefügten Figuren näher erläutert.

Es ist zu beachten, dass im Zusammenhang mit der vorliegenden Beschreibung die Begriffe "aufweisen", "umfassen" oder "enthalten" das Vorhandensein anderer Merkmale keineswegs ausschließen. Außerdem schließt die Verwendung des unbestimmten Artikels für einen Gegenstand den Plural dieses Gegenstands nicht aus.

Es zeigen:
- Figur 1:: ein erfindungsgemäßes System zur Vermessung einer Schall emittierenden Quelle im Einsatz unter Verwendung einer erweiterten Realität (Augmented Reality)
- Figur 2:: ein Modell eines bezogen auf eine Referenzmarke erzeugten virtuellen dreidimensionalen Flächengitters zur Einblendung in Kamerabilder
- Figur 3:: das virtuelle Flächengitter nach Figur 2 eingeblendet in einem Bild
- Figur 4:: ein Modell eines bezogen auf eine Referenzmarke erzeugten virtuellen Flächengitters mit Markierungen, die Messpositionen visualisieren
- Figur 5:: das virtuelle Flächengitter nach Figur 4 eingeblendet in einem Bild
- Figur 6:: eine Anwendung des Messverfahrens bei großen Schallquellen unter Verwendung einer Drohne
- Figur 7:: einen ersten Abschnitt eines erfindungsgemäßen Messverfahrens
- Figur 8:: einen zweiten Abschnitt eines erfindungsgemäßen Messverfahrens
- Figur 9:: aus den Messungen gebildete, zweidimensionale Schallintensitätskarte in Form einer abgerollten Darstellung des dreidimensionalen Flächengitters

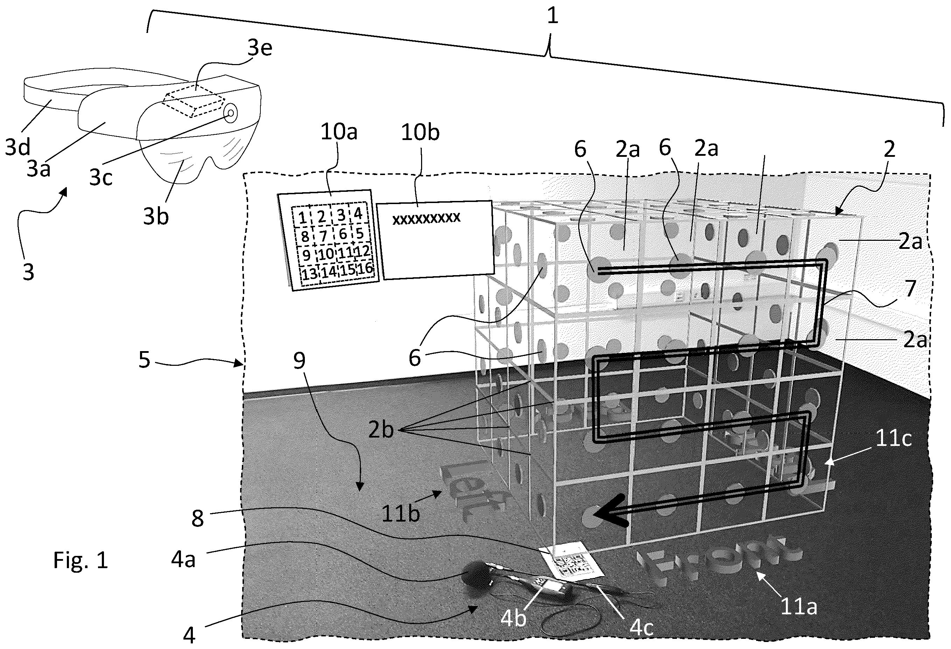

Figur 1 zeigt ein erfindungsgemäßes System 1 zur Vermessung einer Schall emittierenden Quelle im Einsatz unter Verwendung einer erweiterten Realität (Augmented Reality), indem computergenerierte Informationen in Kamerabilder der realen Umgebung der Quelle eingebettet und angezeigt werden, wobei die Quelle in Figur 1 nicht dargestellt ist. Die Quelle wird nachfolgend als Prüfling bezeichnet. Insbesondere dient das System 1 zur akustischen Vermessung von Pumpenaggregaten, die in diesem Fall die Prüflinge sind. Die Quelle ist hier in einem Raum über einem Boden 9 angeordnet. Der Boden 9 sowie die übrigen Wände des Raumes sind nicht zur Schallabsorption präpariert, vielmehr bilden sie Schall reflektierende Flächen.

Das System 1 umfasst eine Schallmesssonde 4c, eine Kamera 3c, eine brillenartige Wiedergabeeinrichtung 3, eine Referenzmarke 8 und eine Steuereinheit 3e. Die Kamera 3c dient der Aufnahme von Bildern von der Quelle, die in eine Cloud hochgeladen werden können.

Die Wiedergabeeinrichtung 3 ist in der Art einer Brille ausgebildet, so dass sie von einer messenden Person während der Vermessung der Quelle auf dem Kopf getragen werden kann. Hierzu dient ein Haltebügel 3d, der an einem Gehäuse 3a der Wiedergabeeinrichtung 3 befestigt ist. Die Wiedergabeeinrichtung 3 weist ein durchsichtiges, d.h. für sichtbares Licht transparentes Display 3b auf, das im bestimmungsgemäßen Gebrauch vor den Augen der Person angeordnet ist und durch welches die messende Person hindurchsehen und die reale Umgebung vor ihr uneingeschränkt sehen kann. Figur 1 zeigt einen Ausschnitt des Sichtfelds 5 der Person, während sie durch das Display 3b der Wiedergabeeinrichtung hindurchschaut.

Im Gebrauch der Wiedergabeeinrichtung 3 werden auf dem Display 3b Informationen angezeigt, die wie Hologramme in der realen Welt wirken. Dies wird von der Steuereinheit 3e mittels einer Verarbeitungssoftware bewirkt, die ebenfalls in die Wiedergabeeinrichtung 3 integriert ist. Die Steuereinheit 3e umfasst einen Prozessor, einen Speicher und die darin gespeicherte, auf dem Prozessor ausführbare Verarbeitungssoftware.

Die Referenzmarke 8 ist relativ zum Prüfling, in einem bestimmten Abstand zu diesem auf dem Boden 9 angeordnet. Diese Anordnung erfolgt manuell, von der messenden Person derart, dass eine spätere Messfläche den Prüfling bzw. die Schall emittierende Quelle einhüllt. Die Referenzmarke 8 kann in einer anderen Ausführungsform fest im Raum installiert sein.

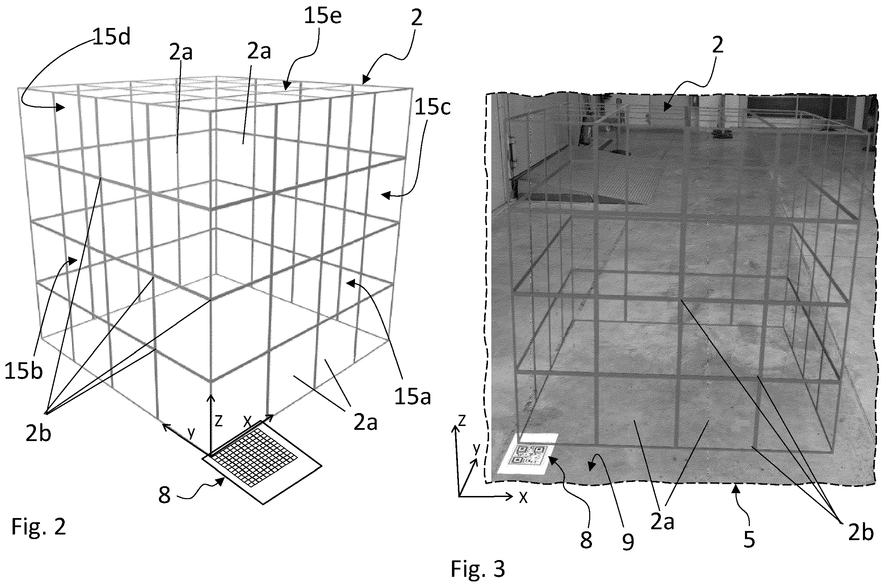

Im vorliegenden Fall handelt es sich bei der Referenzmarke 8 um eine zweidimensionale Form, die auf einem mobilen Träger aufgebracht ist. Durch den Träger ist eine Mobilität des Systems 1 gewährleistet, denn dies ermöglicht es, die Referenzmarke an einem beliebigen Ort neben der zu vermessenden Schallquelle anzuordnen, beispielsweise wie hier auf dem Boden 9 des Raumes, in dem sich die Quelle befindet. Der Träger ist in dem Ausführungsbeispiel in Figur 1 ein Blatt Papier, auf den die Form gedruckt ist. Die Form ist ein QR-Code. Allerdings kann auch eine geeignete andere Form verwendet werden. Die Form definiert den Ursprung und die Richtung der Koordinatenachsen eines virtuellen Koordinatensystems im realen dreidimensionalen Raum, was nachfolgend in Bezug zu Figur 2 noch näher erläutert wird.

Die Verarbeitungssoftware erzeugt in dem Koordinatensystem ein strukturiertes, dreidimensionales Flächengitter 2 aus Gitterzellen 2a und Gitterpunkten 2b derart, dass es die Quelle vollständig umgibt. Das Flächengitter 2 bildet die die Quelle einhüllende Messfläche. Dabei hat man sich zunächst für eine Größe und Form des Flächengitters 2 zu entscheiden, die später im Messgerät und der Wiedergabeeinrichtung 3 ausgewählt werden kann, und zwar derart, dass die Schallquelle allseitig einen Mindestabstand von 0,5m zur Messfläche hat, wobei sinnvollerweise eine initiale Standardgröße und Standardform der Messfläche/ des Flächengitters 2 verwendet wird. Die Referenzmarke 8 wird in einem solchen Abstand zu der zu vermessenden Schallquelle positioniert, dass das initiale Flächengitter 2 um die Schallquelle passt.

**In** der Verarbeitungssoftware können mehrere auswählbare strukturierte dreidimensionale Flächengitter 2 definiert sein, die sich in der Form, Größe, in der Gesamtanzahl an Gitterzellen oder Gitterpunkten und/ oder in der Anzahl an Gitterzellen oder Gitterpunkten pro Flächenabschnitt (Seite) unterscheiden. Eines dieser Flächengitter 2 ist auswählbar, so dass die Größe und Form des Flächengitters 2 von der messenden Person geändert und somit angepasst werden können. Dies ist dann erforderlich, wenn das initiale Flächengitter 2 die Quelle nicht vollständig umgeben sollte. Gegebenenfalls muss die Referenzmarke 8 neu positioniert werden.

Wie Figur 1 erkennen lässt, sind die Gitterzellen 2a alle eben und quadratisch sowie lückenlos und überlappungsfrei nebeneinanderliegend, so dass die Gitterpunkte 2b die gemeinsamen Ecken der Gitterzellen 2b bilden. Das Flächengitter 2 wird somit durch die Kanten der Gitterzellen 2a gebildet. Mathematisch bildet das Flächengitter 2 ein rechtwinkliges, gleichmäßiges, kartesisches Gitter. Es schließt einen Volumenkörper ein, der hier die Form eines Kubus (Würfel) hat. Anders betrachtet, ist die Messfläche in fünf rechtwinklig zueinander liegende Flächenabschnitte 15a, 15b, 15c, 15d, und 15e unterteilt, die jeweils eine Seite des Kubus bilden, nämlich eine Vorderseite 15a, eine linke Seite 15b, eine rechte Seite 15c, eine Rückseite 15 und eine Deckseite 15a, siehe Figur 2. Jeder Flächenabschnitt besteht in dem Beispiel in Figur 1 aus n x n Gitterzellen, wobei n den Wert 4 hat. Insgesamt hat also jeder Teilbereich 16 Gitterzellen (Felder), so dass die gesamte Messfläche aus 5x16 = 80 Gitterzellen besteht.

Die Verarbeitungssoftware legt nach der Erzeugung des virtuellen Flächengitters 2 die im realen dreidimensionalen Raum einzunehmenden Messpositionen bezogen auf die Referenzmarke 8 so fest, dass sie auf dem Flächengitter 2 liegen. Genauer betrachtet, erfolgt dies hier derart, dass die Messpositionen jeweils im Zentrum einer Gitterzelle 2a liegen. Somit legt die Anzahl der Gitterzellen 2a auch die Anzahl der Messpositionen respektive die Anzahl der Messungen fest. Durch die Messungen wird jeder Gitterzelle 2a der Schallmesswert derjenigen Messung zugeordnet, die in der entsprechenden Gitterzelle 2a vorgenommen worden ist. Eine Gitterzelle 2a bildet somit eine Teilmessfläche der vom Flächengitter 2 beschriebenen gesamten Messfläche. Insgesamt umfasst die Messfläche also 80 Teilmessflächen. Mit anderen Worten erfolgt die Vermessung der Schallquelle durch die Vornahme von 80 einzelnen Messungen. Es sei angemerkt, dass zur Einhaltung normativer Vorgaben mindestens 50 Messungen, bzw. Teilflächen oder Gitterzellen benötigt werden, je mehr, desto genauer.

Die Verarbeitungssoftware zeigt auf dem Display 3b virtuelle, je eine der Messpositionen im realen dreidimensionalen Raum visualisierende Markierungen 6 an . Die Markierungen 6 haben somit einen festen Bezug zur Referenzmarke 8 und markieren einen geometrischen Ort im realen Raum, und zwar unabhängig von der Orientierung der Wiedergabeeinrichtung 3, d.h. der Richtung, in die ein Nutzer durch das Display 3b hindurchschaut. Anders ausgedrückt, könnte sich die messende Person durch eine Änderung der Orientierung der Wiedergabeeinrichtung 3 im Raum von den Markierungen 6 abwenden und sieht sie nur dann, wenn sie in Richtung der geometrischen Orte schaut, auf denen die Markierungen 6 im realen Raum liegen.

Die Schallmesssonde 4a ist der sensorische Teil eines Schallmessgeräts 4, welches ferner ein Handgerät 4b umfasst, mit dem die Schallmesssonde 4a über ein Kabel verbunden ist, um die Messdaten an das Handgerät zu übertragen. Die Schallmesssonde 4a ist an einem Ende eines Stabes 4c befestigt, um alle Messpositionen erreichen zu können. Das Handgerät weist ein Display, eine Steuereinheit mit einem Prozessor und einem Speicher und eine darin gespeicherte, auf dem Prozessor ausführbare Messsoftware auf. In der Messsoftware ist eine rasterartige Verteilung der Messpositionen zur Vermessung der Quelle auswählbar, wobei diese Auswahl durch eine grafische Benutzeroberfläche auf dem Display unterstützt wird. Somit hat die die Messung vornehmende Person die Möglichkeit, die rasterartige Verteilung der Messpositionen und die Größe der Messfläche an die zu vermessende Schallquelle anzupassen.

Das Verteilungsraster der Messpositionen in der Messsoftware und das Flächengitter der Verarbeitungssoftware sind in Form und Größe aneinander anzupassen, so dass die Messpositionen mit den Mittelpunkten der Gitterzellen oder den Gitterpunkten korrespondieren. Dabei ist die Messsoftware einfacher ausgestaltet als die Verarbeitungssoftware in dem Sinne, dass sie kein dreidimensionales, sondern mehrere zweidimensionale Verteilungsraster der Messpositionen verwendet. Ein Verteilungsraster kann einem Flächenabschnitt 15a, 15b, 15c, 15d, und 15e entsprechen, so dass im Handgerät fünf einzelne, zweidimensionale Verteilungsraster zusammengesetzt dem dreidimensionalen Flächengitter 2 entsprechen. Ist das Verteilungsraster der Messpositionen in der Messsoftware festgelegt oder von der messenden Person initial festgelegt worden, ist in der Verarbeitungssoftware dasjenige Flächengitter 2 auszuwählen, das in der Messsoftware mit der rasterartigen Verteilung der Messpositionen korrespondiert und dem initial festgelegten Flächengitter 2 entspricht. In dem Beispiel gemäß Figur 1 ist für jeden der Flächenabschnitte 15a, 15b, 15c, 15d, und 15e in der Messsoftware ein 4x4 Verteilungsraster der Messpositionen auszuwählen.

Ist das Verteilungsraster in der Messsoftware festgelegt, können die einzelnen Messungen durchgeführt werden. Hierzu wird die Schallmesssonde 4a nacheinander innerhalb jeder der Markierungen 6 positioniert, so ausgerichtet, dass die Messrichtung normal zur Messfläche liegt, und es wird dort eine Messung aufgenommen. Die Messungen dauern jeweils mehrere Sekunden. Jede Markierung 6 ist durch einen konzentrisch um das Zentrum einer Gitterzelle gelegten Kreis gebildet. Die Schallmesssonde 4a muss also nicht exakt im Zentrum einer Gitterzelle 2a erfolgen. Jede Markierung kennzeichnet somit gleichsam einen Toleranzbereich, innerhalb dem die Messung ausgeführt werden kann. Der Kreis hat etwa den Durchmesser eines Windschutzes des Mikrofons, gegebenenfalls bis zu 5mm größer, um die Positionierung der Schallmesssonde 4a möglichst exakt zu ermöglichen. Die Messsonde 4a sollte so gehalten werden, dass der Windschutz exakt in dem Kreis liegt.

Die Messungen könnten grundsätzlich in einer beliebigen Reihenfolge erfolgen. Wichtig ist allein eine eindeutige Zuordnung zwischen Messung bzw. deren Messwert und Messfläche. Sinnvoll ist es, die Messungen in einer bestimmten Reihenfolge vorzunehmen, die von der Messsoftware vorgegeben wird, idealerweise entlang eines Messpfades 7, womit eine eindeutige Zuordnung zwischen Messwert und Messfläche gegeben ist. Dieser Messpfad 7 ist in Figur 1 in Gestalt eines mäandrierenden Pfeils dargestellt. Er verbindet die Markierungen 6 eines Flächenabschnitts 15a miteinander. Der Messpfad 7 kann als virtuelle Linie ebenfalls auf dem Display 3b dargestellt werden, er kann jedoch auch auf andere Weise visualisiert werden.

Beispielsweise ist, wie Figur 1 zu erkennen gibt, eine erste Einblendung 10a auf dem Display 3b dargestellt, die eine Miniaturansicht desjenigen Flächenabschnitts 15a, 15b, 15c, 15d, 15e des Flächengitters 2 zeigt, auf dem aktuell Schallmessungen erwartet oder durchgeführt werden. Die Miniaturansicht zeigt ein dem Flächenabschnitt hinsichtlich dessen Gitterzellen 2a korrespondierendes Raster mit 4x4 durchnummerierten Feldern. Jedes Feld dieses Rasters entspricht also einer Gitterzelle 2a. Durch die Nummerierung der Felder ist eine Reihenfolge definiert, in der die Messungen in den Gitterzellen 2a stattzufinden haben. Durch die Nummerierung bzw. Reihenfolge ist ebenfalls der Messpfad 7 festgelegt, so dass es keiner virtuellen Linie bedarf. Die bildliche Darstellung der Miniaturansicht kann in Abhängigkeit des Messfortschritts angepasst werden, indem diejenigen Felder, in deren Gitterzellen 2a bereits eine Schallmessung durchgeführt worden ist, in der Miniaturansicht grafisch anders dargestellt werden als Felder von Gitterzellen 2a, in denen noch keine Schallmessung erfolgt ist.

Figur 1 veranschaulicht, dass eine zweite Einblendung 10b auf dem Display 3b angezeigt wird. Diese zeigt textliche Anweisungen an die messende Person. Die Anweisungen erklären schrittweise die Handhabung des Schallmessgeräts 4, die Durchführung des Messvorgangs und/ oder die Handhabung der Wiedergabeeinrichtung 3. Die erste und zweite Einblendung 10a, 10b sind nebeneinander in der linken oberen Ecke des Displays 3b dargestellt, damit die Markierungen 6 nicht überdeckt werden. Die Einblendungen 10a, 10b können allerdings im virtuellen Raum frei verschiebbar durch die messende Person sein, d.h. auch an einer anderen Stelle des Displays 3b angezeigt werden, sowie größer oder kleiner dargestellt werden.

**In** dem Ausführungsbeispiel in Figur 1 werden alle Markierungen 6 gleichzeitig auf dem Display 3b angezeigt. Es sei angemerkt, dass für die Durchführung des erfindungsgemäßen Messverfahrens das Flächengitter 2 selbst nicht unbedingt auf dem Display 3b angezeigt werden muss, da die Markierungen 6 für die Positionierung der Messsonde an den einzelnen Messpositionen ausreichen. Eine Wiedergabe des Flächengitters 2 als virtuelles Liniennetz hilft jedoch, sich zu orientieren und die einzelne Markierung 6 innerhalb der gesamten Messfläche oder eines Flächenabschnitts der Messfläche korrekt einzuordnen.

Die von der Schallmesssonde 4a gemessene Größe ist hier der Schalldruck, der von zwei entgegengesetzt ausgerichteten Mikrofonen in der Schallmesssonde 4a gemessen wird. Aus den Schalldruck-Messwerten der Mikrofone berechnet die Messsoftware die Schallintensität, so dass die Schallmesssonde 4a als Intensitätssonde bezeichnet werden kann.

Figur 2 zeigt nur das Flächengitter 2 aus Figur 1 und die Referenzmarke 8. Hieran wird deutlich, dass eine gezeichnete zweidimensionale Figur in Form eines Rechtecks als Referenzmarke 8 wie beispielsweise einem QR-Code für die Positionierung und Ausrichtung des Flächengitters 2 im realen Raum besonders vorteilhaft ist, da eine Ecke des Rechtecks den Ursprung markieren kann und die beiden von der Ecke ausgehenden Kanten der Form zwei der drei Koordinatenachsen eines kartesischen Koordinatensystems definieren, nämlich die x- und y-Richtung, wobei die dritte Koordinatenachse, die z-Richtung, rechtwinklig zu den beiden Kanten liegt, d.h. sich orthogonal aus der Ecke des Rechtecks erhebt oder mit anderen Worten normal auf dem Träger liegt. Das dreidimensionale Flächengitter 2 wird dann mit einer Ecke auf dem Ursprung des durch die Referenzmarke 8 definierten Koordinatensystems positioniert und so ausgerichtet, dass es sich mit einer Kante einer die Ecke umfassenden Gitterzelle entlang der Kante der gezeichneten Form erstreckt, wie insbesondere Figur 2 erkennen lässt. Die Lage und Ausrichtung des Flächengitters 2 im realen Raum ist damit festgelegt.

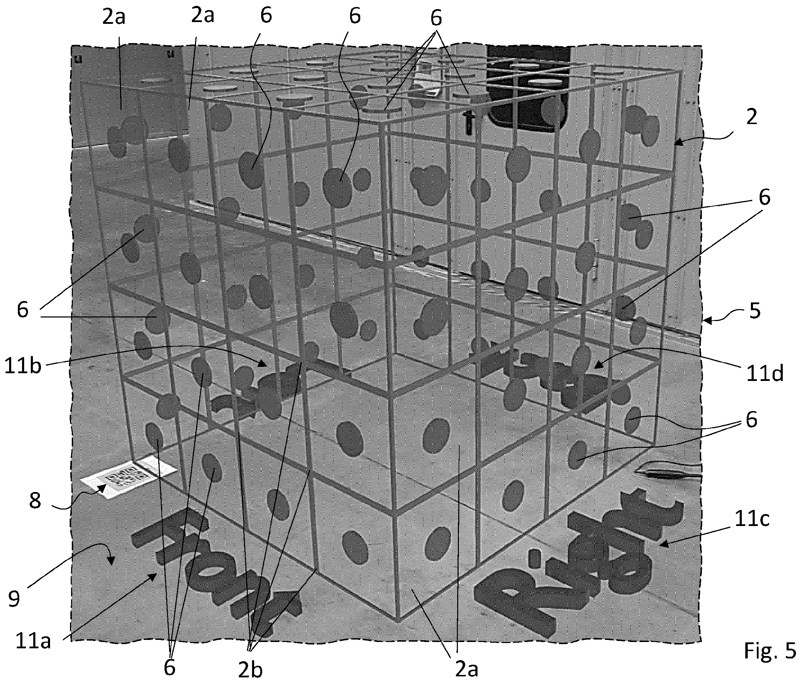

Gleichzeitig ist auch die Orientierung des Flächengitters 2 in Bezug auf die Referenzmarke 8 festgelegt. So wird derjenige Flächenabschnitt 15a, dem die Gitterzelle 2a angehört, deren Kante entlang der Kante der gezeichneten Form ausgerichtet wird, als Vorderseite 15a (FRONT) festgelegt. Daraus folgt dann automatisch, welcher der Flächenabschnitte die rechte Seite, linke Seite und die Rückseite bildet. Ein QR-Code als Referenzmarke 8 hat den Vorteil, dass aufgrund der in ihm enthaltenen Informationen seine Orientierung im Raum unmittelbar erkennbar ist. Dies kann zur Prüfung verwendet werden, ob die festgelegte Orientierung korrekt ist. Wie Figuren 1 und 5 zeigen, können bei dem Flächengitter 2 Ortsangaben wie vorne (FRONT), hinten (BACK), rechts (RIGHT) und links (LEFT) durch virtuelle textliche Hinweise 11a, 11b, 11c, 11d ergänzend auf dem Display 3b angezeigt werden. Dies wiederum hilft der messenden Person, die Flächenabschnitte 15a, 15b, 15c, 15d des Flächengitters 2 während der Messung zu unterscheiden und eindeutig zu identifizieren.

Figur 3 zeigt ein weiteres Sichtfeld 5 einer durch die Wiedergabeeinrichtung 3 in einen Raum schauenden Person, hier einer Werkshalle, wobei auf dem Display 3b ebenfalls ein kartesisches Flächengitter 2, das einen Kubus beschreibt, räumlich bezogen auf eine auf den Boden 9 des Raumes gelegte Referenzmarke 8 dargestellt ist. Markierungen 6 der Messpositionen sind hier nicht visualisiert. Ebenso fehlt die Schallquelle. Die Referenzmarke 8 ist auch hier ein QR-Code. Das durch die Referenzmarke 8 definierte Koordinatensystem mit den Koordinatenachsen x, y und z ist auf dem Display ebenfalls nicht dargestellt. Zum Zwecke der Veranschaulichung der durch die Referenzmarke 8 festgelegten Orientierung des Koordinatensystems ist es jedoch außerhalb des Bildes 5 dargestellt.

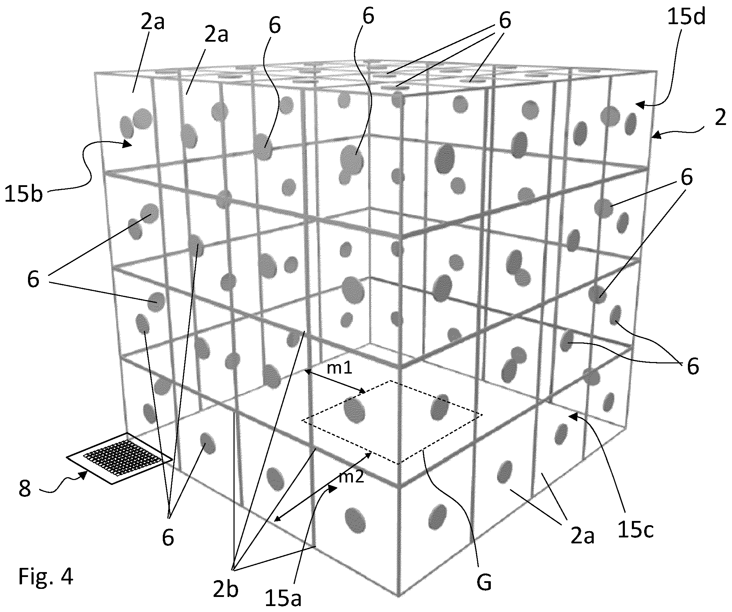

Figur 4 zeigt das Flächengitter 2 gemäß Figur 2 in einer anderen Perspektive, nämlich mit Blick auf die Vorderseite 15a und die rechte Seite 15c, wobei hier analog zu Figur 1 zusätzlich die Markierungen 6 dargestellt sind. Für die Beschreibung des Flächengitters 2 wird deshalb auf die Ausführungen zu Figur 1 verwiesen.

In Figur 5 ist das Flächengitter 2 gemäß Figur 4 auf dem Display 3b dargestellt und überlagert somit im Sichtfeld 5 der Person das Bild des realen Raums als virtuelles Flächengitter 2. Die Schallquelle ist hier erneut nicht gezeigt.

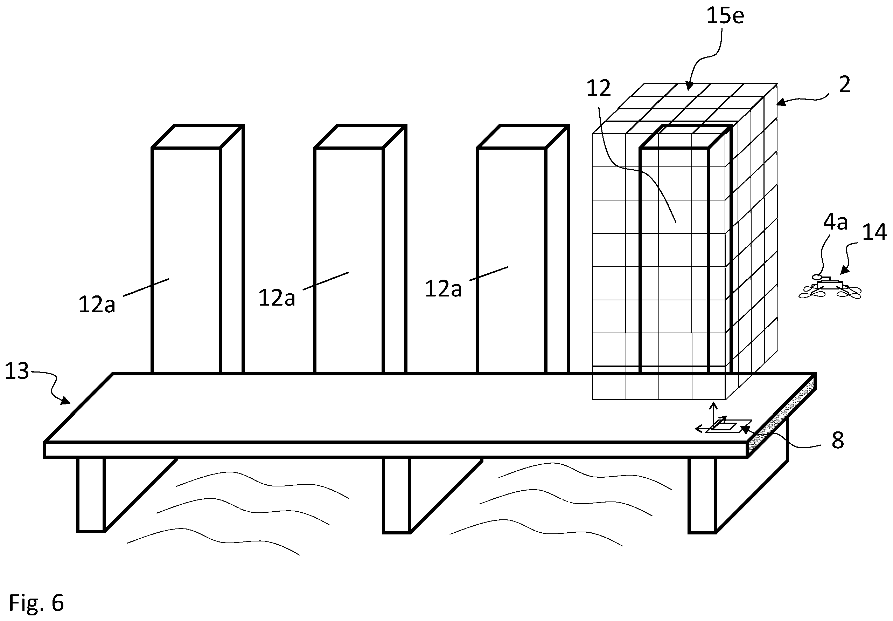

In einer besonderen Ausführungsvariante, die in Figur 6 in der Art einer Prinzipskizze gezeigt ist, ist die Schallmesssonde 4a Teil einer fernsteuerbaren Drohne 14. Dies dient der Vermessung großer Schallquellen 12, 12a, die hier in Gestalt von senkrecht stehenden Turbinenpumpen 12, 12a eines Staudamms 13 viele Meter in die Höhe ragen, beispielsweise 5m bis 10m. Wie am Beispiel der ganz rechts in Figur 6 dargestellten Schallquelle 12 deutlich wird, kann das dreidimensionale, kartesische Flächengitter 2 auch um eine solch große Schallquelle 12 virtuell gelegt werden. Selbstverständlich können die Messpositionen auf dem Flächengitter 2 in diesem Fall nicht mehr von der messenden Person erreicht werden. Hierzu kann sich die Person jedoch der Drohne 14 bedienen, die eine oder mehrere Schallmesssonden 4a montiert hat. Die Person trägt in dem Fall ebenfalls die brillenartige Wiedergabeeinrichtung 3 und sieht die die einzelnen Messpositionen visualisierenden Markierungen 6, die die Verarbeitungssoftware auf dem Display 3b darstellt. Die Markierungen 6 sind in Figur 6 aus Gründen der Übersichtlichkeit allerdings weggelassen. Die Person steuert die Drohne 14 nunmehr so, dass sie die einzelnen Markierungen 6, das heißt das Zentrum der jeweiligen Gitterzelle 2a nacheinander anfliegt. Dort wird sie dann für einige wenige Sekunden in Position gehalten, um eine Schallmessung durchzuführen.

Während in Figur 6 die Sonde 4a auf der Drohne 14 angeordnet ist, kann sie alternativ oder kann eine zusätzliche Sonde an der Unterseite der Drohne 14 angeordnet sein. Ferner kann, während die dargestellte Sonde 4a zur Seite bzw. nach vorne in Richtung der zu vermessenden Schallquelle gerichtet ist, eine weitere, insbesondere unter der Drohne angeordnete Sonde nach unten gerichtet sein, um somit beim Überfliegen der horizontalen Deckfläche 15e des Flächengitters 2 Messungen auf der Deckfläche 15e vorzunehmen.

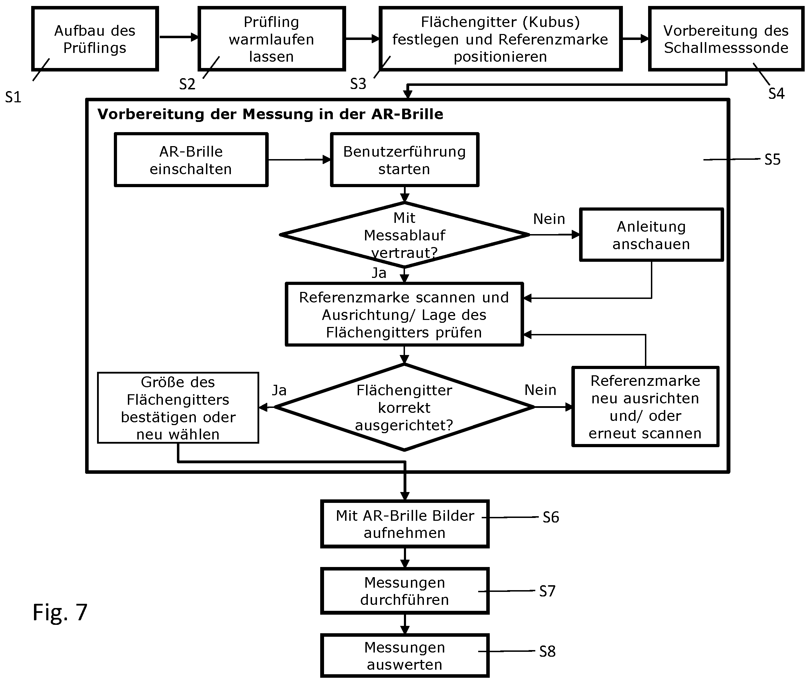

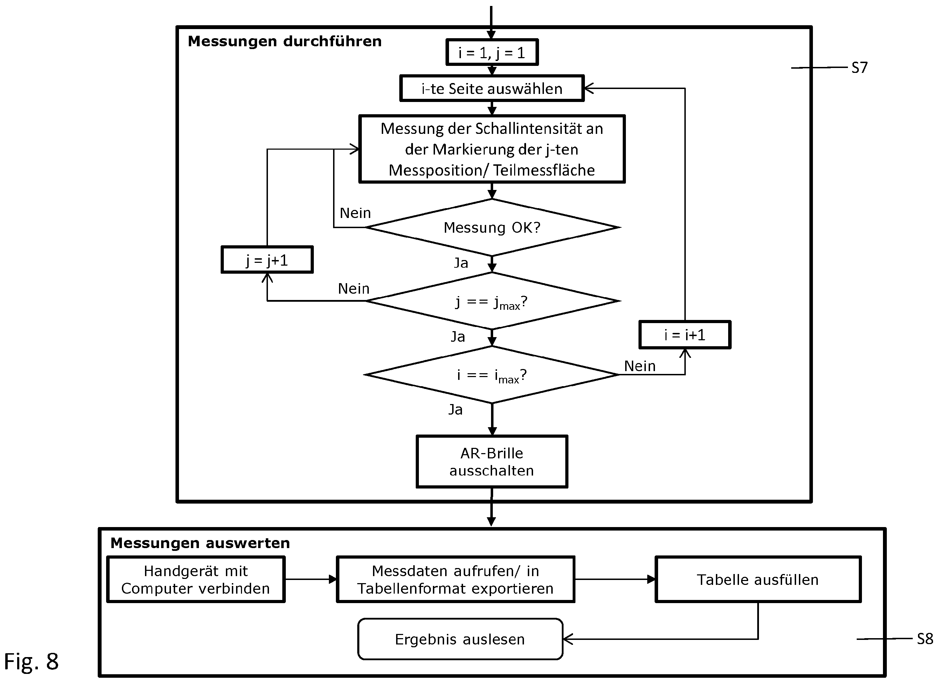

Figuren 7 und 8 zeigen einen beispielhaften Verfahrensablauf des erfindungsgemäßen Messverfahrens, der nachfolgend beschrieben wird. Die Wiedergabeeinrichtung 3 wird nachfolgend aufgrund ihrer Form und Funktion als AR-Brille 3 bezeichnet.

Zu Beginn des Verfahrens wird die akustisch zu vermessende Schallquelle, respektive der Prüfling, aufgebaut, Schritt S1, und in Betrieb genommen, so dass der Prüfling "warmläuft" und der abgestrahlte schallstationär ist, Schritt S2.

Anschließend wird das Flächengitter 2 respektive ein Quader oder Kubus von der messenden Person initial anhand der Größe des Prüflings so festgelegt und die Referenzmarke 8 relativ zum Prüfling so positioniert, dass das virtuelle Flächengitter 2 den Prüfling allseitig mit einem Mindestabstand von 0,5m umgeben wird. Die Positionierung der Referenzmarke 8 erfolgt üblicherweise am Boden 9, Schritt S3. Hat der Prüfling beispielweise Maße (Länge x Breite x Höhe) von 0,8m x 0,8m x 1,7m, kann, um den Prüfling vollständig zu umschließen und 0,5m Mindestabstand m1, m2 zwischen Prüfling und Flächengitter 2 einzuhalten, ein initiales Flächengitter 2 mit den Maßen 2m x 2m x 2,5m verwendet werden. Dies ist in Figur 4 anhand der Grundfläche G des Prüflings veranschaulicht. Die Referenzmarke 8 wird so positioniert, dass der Prüfling später, wenn das Flächengitter 2 als virtuelles Flächengitter 2 (Hologramm) auf dem Display 3b der Wiedergabeeinrichtung 3 angezeigt wird, in der Mitte des virtuellen Flächengitters 2 angeordnet ist. Das bedeutet, dass die Referenzmarke 8, genauer gesagt ihre den Ursprung des Koordinatensystems definierende Ecke, mit einem Abstand m2 = 60cm sowohl zur Vorderseite als auch in einem Abstand m1 = 60cm zur linken (oder je nach Positionierung der Referenzmarke rechten) Seite der Grundfläche G des Prüflings angeordnet wird.

Anschließend werden das Schallmessgerät 4 respektive die Schallmesssonde 4a in Schritt S4, und die AR-Brille 3 vorbereitet, Schritt S5. Letzteres erfolgt derart, dass die AR-Brille 3 zunächst eingeschaltet wird, woraufhin automatisch eine grafische Benutzerführung gestartet wird, die auf dem Display 3b der AR-Brille 3 wiedergegeben wird. Nach starten der Verarbeitungssoftware wird der Anwender aufgefordert die Referenzmarke mit der Kamera 3c zu scannen, weshalb die Ausrichtung dieser auf dem Boden relativ zum Prüfling bereits zuvor erfolgt ist. In der Verarbeitungssoftware erfolgt zunächst eine Abfrage, ob die messende Person mit dem Messablauf vertraut ist. Ist dies nicht der Fall, wird die Person gebeten, die Anleitung anzuschauen.

Die auf der AR-Brille 3 ablaufende Verarbeitungssoftware erzeugt daraufhin ein initiales strukturiertes, dreidimensionales, kartesisches Flächengitter 2 in Form eines Quaders oder Kubus, und zeigt es auf dem Display 3b als virtuelles Flächengitter 2 an. Dabei positioniert und orientiert die Verarbeitungssoftware das Flächengitter 2 so, dass es mit einer Ecke auf dem Ursprung des durch die Referenzmarke 8 definierten Koordinatensystems liegt und die von dieser Ecke ausgehenden Kanten des Flächengitters 2 parallel zu den Koordinatenachsen liegen. Die messende Person hat daraufhin zu prüfen, ob die Lage und Ausrichtung/Orientierung des Flächengitters 2 korrekt sind. Dabei ist insbesondere zu prüfen, ob das Flächengitter 2 in eine Raumrichtung verkippt ist. Ist dies nicht der Fall, sollte die Lage und Ausrichtung der Referenzmarke 8 überprüft und gegebenenfalls korrigiert werden. Gegebenenfalls reicht es auch, wenn die Referenzmarke 8 erneut gescannt wird. Ist die Lage und Ausrichtung des Flächengitters 2 korrekt, ist als nächstes zu prüfen, ob der Prüfling im Zentrum des Quaders oder Kubus liegt, d.h. der Quader oder Kubus den Prüfling vollständig umgibt. Ist dies der Fall, wird die Verwendung des initialen Flächengitters 2 durch die Person bestätigt. Für den Fall, dass das initiale Flächengitter 2 allerdings zu klein oder zu groß ist, oder dass eine höhere oder geringere Messauflösung bzw. Anzahl an Messpositionen für alle oder einzelne Flächenabschnitte 15a, 15b, 15c, 15d, 15e des Flächengitters 2 gewünscht wird, als es bei dem initialen Flächengitter 2 vorgesehen ist, kann das Flächengitter 2 in der Verarbeitungssoftware geändert, insbesondere auch neu ausgewählt werden. Die Vorbereitung der Messung in der AR-brille 3, Schritt S5, ist somit abgeschlossen.

Optional werden anschließend mithilfe der Kamera 3c Bilder vom Prüfling zu Dokumentationszwecken aufgenommen, Schritt S6. An den einzelnen diskreten Messpositionen auf dem Flächengitter 2 werden dann die Messungen durchgeführt, Schritt S7. Nach der Durchführung der Messungen werden diese ausgewertet, Schritt S8.

Eine detaillierte Darstellung der einzelnen Verfahrensschritte bei der Durchführung und Auswertung der Messungen gemäß der Schritte S7 und S8 ist in Figur 8 dargestellt.

Für die Durchführung der Messungen werden die einzelnen Messpositionen durch zwei Indizes i, j identifiziert, die zu Beginn von Schritt S7 initialisiert werden, hier jeweils mit dem Wert 1. Der Index i definiert den Flächenabschnitt 15a, 15b, 15c, 15d, 15e des Flächengitters 2, respektive die Seite des Quaders oder Kubus, wohingegen der Index j eine Laufvariable für die j-te Messposition entlang des Messpfades 7 ist. Somit nimmt der Index i die Werte 1 bis iₘₐₓ = 5 an und der Index j Werte von 1 bis zur Anzahl der Gitterzellen eines Flächenabschnitts 15a, 15b, 15c, 15d, 15e. Mit Bezug auf die Figuren 1 bis 5, in denen das Flächengitter 2 jeweils 4x4 Gitterzellen 2a umfasst, ist der Maximalwert jₘₐₓ des Index j also 16.

Begonnen wird somit beim ersten Flächenabschnitt 15a respektive bei der ersten Seite des Quaders oder Kubus (i = 1) und bei der ersten Messposition bzw. Teilmessfläche/ Gitterzelle 2a (j = 1) dieses ersten Flächenabschnitts 15a. Hier erwartet das Schallmessgerät 4 bzw. die Messsoftware die erste Messung. Die Person führt die Schallmesssonde 4a an diese erste Messposition, wo für einige Sekunden eine Schallmessung durchgeführt wird, wobei das Schallmessgerät angibt, wann die Messung beendet ist. Ist sie nicht ok, wird dieses im Handgerät angezeigt und sie wird wiederholt, anderenfalls wird der Index j um eins erhöht und zur nächsten Messposition übergegangen. Das bedeutet, dass die Person die Schallmesssonde nun an der zweiten Messposition (j = 2) positioniert und das Schallmessgerät 4 bzw. die Messsoftware die Messung an der zweiten Messposition erwartet. Dieses Vorgehen wird nun so oft wiederholt, wie es Messpositionen in dem ersten Flächenabschnitt 15a gibt.

Vor jeder Inkrementierung des zweiten Indizes j wird überprüft, ob dieser den Maximalwert jₘₐₓ bereits erreicht hat, das heißt zuletzt die letzte Messposition vermessen worden ist. Ist dies der Fall, wird zum zweiten Flächenabschnitt 15b übergegangen, d.h. der erste Index i inkrementiert. Das für den ersten Flächenabschnitt 15a dargestellte Verfahren wird nunmehr für alle Messpositionen auf dem zweiten Flächenabschnitt 15b nacheinander ausgeführt, sowie für den dritten, vierten und fünften Flächenabschnitt 15a, 15d, 15e nacheinander ausgeführt. Vor jeder Inkrementierung des ersten Indizes i wird überprüft, ob dieser den Maximalwert iₘₐₓ erreicht hat, das heißt zuletzt der letzte Flächenabschnitt vermessen worden ist. Ist dies der Fall, sind alle Messungen vollständig durchgeführt worden, und die AR-Brille 3 kann ausgeschaltet werden.

Die Auswertung der Messungen sieht vor, dass das Handgerät zunächst mit einem Computer verbunden wird. Der Computer greift auf das Handgerät zu und importiert die gewünschten Daten.

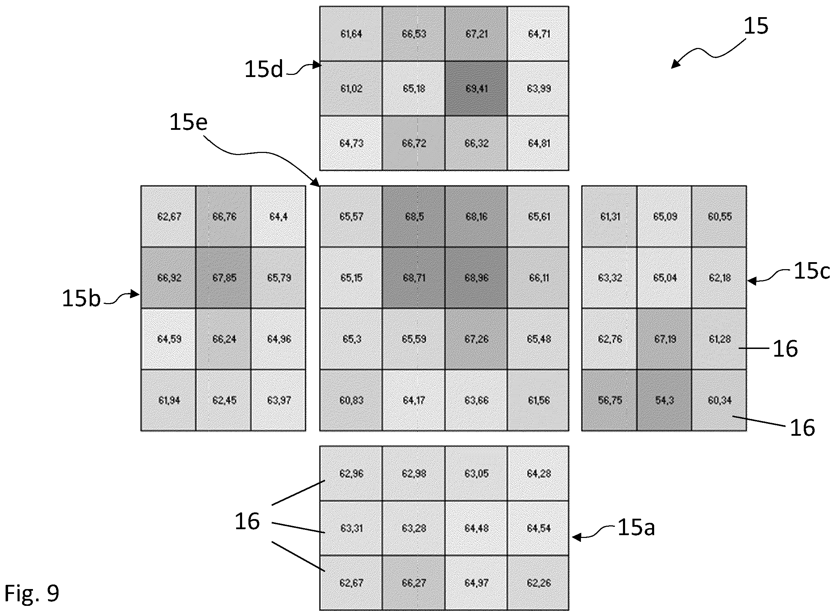

Figur 9 zeigt eine grafische Visualisierung der Messwerte in Gestalt einer aus den Messungen gebildeten, zweidimensionalen Schallintensitätskarte, welche quasi eine abgerollte, d.h. zweidimensionale Darstellung der gesamten Messfläche 15 bzw. des dreidimensionalen Flächengitters 2 ist, in der die einzelnen Messpositionen rechteckigen Feldern 16 entsprechen, die mit den Gitterzellen 2a korrespondieren. Die Schallintensitätskarte ist aus den einzelnen Flächenabschnitten 15a, 15b, 15c, 15d, 15e zusammengesetzt, wobei der fünfte, die Deckfläche beschreibende Flächenabschnitt 15e in der Mitte liegt.

Mit dem vorgestellten Verfahren wird der zeitliche Aufwand für die Vermessung eines Prüflings erheblich reduziert. Die Durchführung des Verfahrens ist vergleichsweise einfach und die Kosten für die Schallmessungen werden deutlich reduziert. Ein besonderer Vorteil besteht darin, dass in der AR-Brille 3 Anweisungen gleichzeitig zu den Messungen angezeigt werden können. Die Größe und Form des Flächengitters 2, insbesondere des Quaders oder Kubusses, sind außerdem variabel und können somit an den Bedarf angepasst werden.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

## Patentansprüche

1. Verfahren zur umgebungsunabhängigen akustischen Vermessung einer Schall emittierenden Quelle (12) durch Messung des Schalls an einer Vielzahl diskreter Messpositionen, die auf einer die Quelle (12) vollständig umschließenden Messfläche liegen, bei dem zur Vermessung eine erweiterte Realität verwendet wird, indem
- eine Kamera (3c) eine relativ zur Quelle (12) im Raum angeordnete, physische Referenzmarke (8) scannt, die den Ursprung und die Richtung der Koordinatenachsen eines virtuellen dreidimensionalen Koordinatensystems im realen dreidimensionalen Raum definiert,
- eine Verarbeitungssoftware in dem Koordinatensystem ein die Messfläche bildendes, strukturiertes, dreidimensionales Flächengitter (2) aus Gitterzellen (2a) und Gitterpunkten (2b) und mit einer vorbestimmten oder vorgegebenen Größe erzeugt und die im realen dreidimensionalen Raum einzunehmenden Messpositionen derart bezogen auf die Referenzmarke (8) festlegt, dass sie auf dem Flächengitter (2) liegen,
- die Verarbeitungssoftware virtuelle, je eine der Messpositionen im realen dreidimensionalen Raum visualisierende Markierungen (6) erzeugt und auf einem durchsichtigen Display (3b) einer brillenartigen Wiedergabeeinrichtung (3) derart anzeigt, dass die geometrischen Orte der Markierungen (6) im realen Raum bezogen auf die Referenzmarke (8) fix und unabhängig von der Orientierung des Displays (3b) sind, und
- die Vermessung derart erfolgt, dass eine durch das Display hindurch sichtbare Schallmesssonde (4a) während der Anzeige der Markierungen (6) nacheinander manuell an die Orte der virtuellen Markierungen (6) geführt wird und anschließend dort jeweils eine Messung der Schallintensität durchgeführt wird.

2. Verfahren nach Anspruch 1, **dadurch gekennzeichnet, dass** die virtuellen Markierungen (6) einzeln nacheinander angezeigt werden.

3. Verfahren nach Anspruch 1, **dadurch gekennzeichnet, dass** alle virtuellen Markierungen (6) gleichzeitig, oder nur diejenigen virtuellen Markierungen (6) angezeigt werden, die aus der Perspektive der Kamera (3c) keine durch die Quelle (12) verdeckte Messposition im realen dreidimensionalen Raum visualisieren, oder dass nur diejenigen Markierungen (6) angezeigt werden, die zu einem bestimmten, insbesondere dem aktuellen Flächenabschnitt (15a, 15b, 15c, 15d, 15e) des Flächengitters (2) gehören.

4. Verfahren nach einem der vorherigen Ansprüche, **dadurch gekennzeichnet, dass** eine der virtuellen Markierung (6) vom einem ersten Anzeigezustand in einen zweiten Anzeigezustand übergeht, sobald die Schallmesssonde (4a) den geografischen Ort der Messposition, den diese Markierung (6) visualisiert, im realen dreidimensionalen Raum erreicht hat.

5. Verfahren nach einem der vorherigen Ansprüche, **dadurch gekennzeichnet, dass** sich eine der virtuellen Markierungen (6) gegenüber einer anderen der virtuellen Markierungen (6) unterscheidet, um die Messposition der nächsten, insbesondere erwarteten Messung anzuzeigen.

6. Verfahren nach einem der vorherigen Ansprüche, **dadurch gekennzeichnet, dass** auch das Flächengitter (2) auf dem Display (3b) angezeigt wird.

7. Verfahren nach einem der vorherigen Ansprüche, **dadurch gekennzeichnet, dass** die Messpositionen jeweils im Zentrum einer der Gitterzellen (2a) oder auf einem der Gitterpunkte (2b) liegen und dass jeder Gitterzelle (2a) oder jedem Gitterpunkt (2b) ein Schallmesswert derjenigen Messung zugeordnet wird, die in der entsprechenden Gitterzelle (2a) oder an dem entsprechenden Gitterpunkt (2b) vorgenommen wird.

8. Verfahren nach einem der vorherigen Ansprüche, **dadurch gekennzeichnet, dass** das Flächengitter (2) rechtwinklig und gleichmäßig ist, insbesondere ein kartesisches Gitter ist.

9. Verfahren nach einem der vorherigen Ansprüche, **dadurch gekennzeichnet, dass** die Referenzmarke (8) ein Quadrat, insbesondere ein Matrixcode, vorzugsweise ein QR-Code ist.

10. Verfahren nach einem der vorherigen Ansprüche, **dadurch gekennzeichnet, dass** Einblendungen (10a, 10b) mit textlichen und/ oder bildlichen Anweisungen auf dem Display (3b) angezeigt werden.

11. Verfahren nach Anspruch 10, **dadurch gekennzeichnet, dass** die Einblendung (10a) eine Miniaturansicht eines Flächenabschnitts (15a) des Flächengitters (2) ist, auf dem aktuell Schallmessungen von der Verarbeitungssoftware erwartet werden, wobei die Miniaturansicht in Abhängigkeit des Messfortschritts angepasst wird, indem diejenigen Gitterzellen (2a) oder Gitterpunkte (2b), bei denen bereits eine Schallmessung durchgeführt worden ist, in der Miniaturansicht grafisch anders dargestellt werden, als Gitterzellen (2a) oder Gitterpunkte (2b), in denen noch keine Schallmessung erfolgt ist.

12. Verfahren nach einem der vorherigen Ansprüche, **dadurch gekennzeichnet, dass** die Schallmesssonde (4a) Messdaten an ein Handgerät (4b) überträgt, auf dem eine Messsoftware abläuft, in der eine rasterartige Verteilung von Messpositionen zur Vermessung der Quelle (12) auswählbar ist, insbesondere visualisiert durch eine grafische Benutzeroberfläche auf einem Display des Handgeräts (4b), wobei das dreidimensionale Flächengitter (2) auf die ausgewählte rasterartige Verteilung der Messpositionen abgestimmt ist, so dass die Messpositionen mit den Mittelpunkten der Gitterzellen (2a) oder den Gitterpunkten (2b) korrespondieren.

13. System (1) zur Durchführung des Verfahrens zur umgebungsunabhängigen akustischen Vermessung einer Schall emittierenden Quelle (12) nach einem der Ansprüche 1 bis 12, umfassend eine Schallmesssonde (4a), eine physische, relativ zur Quelle (12) anzuordnende Referenzmarke (8), die den Ursprung und die Richtung der Koordinatenachsen eines virtuellen dreidimensionalen Koordinatensystems im realen dreidimensionalen Raum definiert, eine Kamera (3c) zur Erfassung einer Referenzmarke (8), eine brillenartige Wiedergabeeinrichtung (3) mit einem durchsichtigen Display (3b) und eine Steuereinheit (3e) mit einem Prozessor, einem Speicher und einer darin gespeicherten, auf dem Prozessor ausführbaren Verarbeitungssoftware, die eingerichtet ist,
- in dem Koordinatensystem ein strukturiertes, dreidimensionales Flächengitter (2) aus Gitterzellen (2a) und Gitterpunkten (2b) und mit einer vorbestimmten oder vorgegebenen Größe derart zu erzeugen, dass es die Quelle (12) vollständig umgibt,
- die im realen dreidimensionalen Raum einzunehmenden Messpositionen derart bezogen auf die Referenzmarke (8) festzulegen, dass sie auf dem Flächengitter (2) liegen, und
- virtuelle, je eine der Messpositionen im realen dreidimensionalen Raum visualisierende Markierungen (6) auf dem Display (3b) derart anzuzeigen, dass die geometrischen Orte der Markierungen (6) im realen Raum bezogen auf die Referenzmarke (8) fix und unabhängig von der Orientierung des Displays (3b) sind.

14. System nach Anspruch 13, **dadurch gekennzeichnet, dass** die Kamera (3c) baulich mit der Wiedergabeeinrichtung (3) eine Einheit bildet und/ oder dass die Steuereinheit (3e) in die Wiedergabeeinrichtung (3) integriert ist.

15. System nach Anspruch 13 oder 14, **dadurch gekennzeichnet, dass** in der Verarbeitungssoftware mehrere auswählbare strukturierte dreidimensionale Flächengitter (2) implementiert sind, die sich in der Form, Größe, in der Gesamtanzahl an Gitterzellen (2a) oder Gitterpunkten (2b) und/ oder in der Anzahl an Gitterzellen (2a) oder Gitterpunkte (2b) pro Flächenabschnitt (15a, 15b, 15c, 15d, 15e) unterscheiden.

16. System nach einem der vorherigen Ansprüche 13 bis 15, **dadurch gekennzeichnet, dass** die Schallmesssonde (4c) baulich mit einem Handgerät (4b) eine Einheit bildet, und das Handgerät (4b) ein Display, eine Steuereinheit mit einem Prozessor und einem Speicher und eine darin gespeicherte, auf dem Prozessor ausführbare Messsoftware aufweist, in der eine rasterartige Verteilung von Messpositionen zur Vermessung der Quelle (12) auswählbar ist, insbesondere visualisiert durch eine grafische Benutzeroberfläche auf dem Display.

17. System nach einem der vorherigen Ansprüche 13 bis 15, **dadurch gekennzeichnet, dass** die Schallmesssonde (4c) Teil einer fernsteuerbaren Drohne (14) ist.

18. System nach einem der vorherigen Ansprüche 13 bis 17, **dadurch gekennzeichnet, dass** die Referenzmarke (8) auf einem mobilen Träger aufgebracht, insbesondere gedruckt ist, beispielsweise auf einem Blatt Papier.
